# EUROPÄISCHE PATENTSCHRIFT

(11) **EP 0 805 299 B1**
(45) Veröffentlichungstag und Bekanntmachung des Hinweises auf die Patenterteilung: **19.12.2001**
(21) Anmeldenummer: 97810229.1
(22) Anmeldetag: 16.04.1997
(51) Int. Cl.: F16L 35/00, E03C 1/02, B29C 45/16

(54) **Einrichtung zur Verbindung einer flexiblen Kunststoff-Doppel-Rohrleitung mit einem Gebrauchswasser-Verbraucher**
Device for connecting a flexible plastic double walled pipe to a water consumer
Dispositif de raccordement d'un tuyau plastique flexible à parois doubles à un consommateur d'eau.

(30) Priorität: 29.04.1996 CH 107296
(43) Veröffentlichungstag der Anmeldung: 05.11.1997
(73) Patentinhaber: JRG Gunzenhauser AG, 4450 Sissach (CH)
(72) Erfinder: Bürli, Kurt, 4463 Buus (CH)
(74) Vertreter: Heinen, Detlef

(56) Entgegenhaltungen:
- EP-A- 0 538 197
- EP-B- 0 354 177
- DE-C- 4 243 737
- FR-A- 2 717 557
- GB-A- 1 496 896
- US-A- 3 109 461

## Beschreibung

### Anwendungsgebiet der Erfindung

Die Erfindung betrifft eine Einrichtung zur Verbindung mindestens einer flexiblen Kunststoff-Doppel-Rohrleitung (Rohr-In-Rohr-System) mit einem Gebrauchswasser-Verbraucher, wobei das Doppelrohr zumeist unter Putz verlegt ist und die Einrichtung zum direkten oder indirekten Anschluss einer dem Verbraucher vorgeschalteten Armatur dient. Die Einrichtung besteht aus einem Dosen-Grundkörper, einem darin eingesetzten Anschlussstück sowie einem über das Doppelrohr schiebbaren, flexiblen Dosenfuss, der mit dem Dosen-Grundkörper verbindbar ist. Der Dosenfuss umschliesst den Endabschnitt des an die Dose zuführenden Doppelrohrs, nämlich sowohl das wasserführende Innenrohr als auch das dieses umgebende Leerrohr. Ist die Einrichtung derart konzipiert, dass jener Ast des Anschlussstücks, an welchen das zuführende Doppelrohr anzuschliessen ist, aus dem Dosen-Grundkörper herausragt, kann der Dosenfuss auch diesen Ast partiell umschliessen. Ferner betrifft die Erfindung ein Verfahren zur massenweisen Herstellung des Dosenfusses.

### Stand der Technik

Ein Typ solcher Einrichtungen (vgl. GB-A-2 021 233; Katalog der Firma IDROKON S.r.l., Dossobuono/IT, 1991) besteht aus einem Dosen-Grundkörper, in dem ein winkliges Anschlussstück eingesetzt ist. Der horizontale Ast des Anschlussstücks dient zum Anschluss des Verbrauchers und der vertikale, nach unten weisende Ast zum Anschluss des Doppelrohrs. Der vertikale Ast ist vollständig im Dosen-Grundkörper eingebettet, so dass man zum Anschliessen des Doppelrohrs das Anschlussstück aus der zuvor befestigten Dose nach vorn herausnehmen und das Innenrohr durch die Dose führen muss. Die Verbindung - zumeist eine Verschraubung - erfolgt dann ausserhalb des Dosen-Grundkörpers. Nach der Verschraubung wird das Anschlussstück wieder in die Dose zurückgeführt und fixiert und schliesslich der über dem Doppelrohr steckende Dosenfuss unten an den Dosen-Grundkörper herangeschoben. Der Dosenfuss hat die Funktion, die Verschraubung vor Mörtel zu schützen und das Leerrohr zu haltern. Diese Anschlusseinrichtungen haben den Nachteil einer relativ aufwendigen Montage durch die Notwendigkeit, das Anschlussstück zum Verschrauben mit den Doppelrohr herausnehmen zu müssen. Der Dosenfuss ist starr und erschwert somit die Rohrverlegung.

Aus der DE-A-35 22 390 und dem Prospekt "optiflex® - Sanitär-Installationssystem 0-286", 4.86 der R. Nussbaum AG, Olten/CH, ist eine Anschlussdose für eine Wasserarmatur bekannt, die eine Basishälfte und eine Deckhälfte aufweist. Hier ist kein separater, aufschiebbarer Dosenfuss vorgesehen, sondern die Abdeckung und Halterung des Anschlusses bzw. des Leerrohrs erfolgt durch den verengenden Fortsatz an beiden zusammenfügbaren Halbschalen. Die Montage ist hier etwas vereinfacht, da das Durchfädeln des Innenrohrs durch die Dose beim Anschliessen entfällt. Umstände beim Anschliessen verursacht jedoch noch das freihängende Anschlussstück. Zudem zwingen die starren Fortsätze an den Dosen-Halbschalen zu einer geradlinigen Zuführung der Doppelrohrs.

Eine entscheidend verbesserte Montage ermöglichte die Dose gemäss dem EP-B-0 354 177 (vgl. auch den Prospekt "JRG Gunzenhauser INFO 2/92" der J. + R. Gunzenhauser AG, Sissach/CH). Durch die Zweiteilung der Dose in einen Dosen-Grundkörper und einen auf dem Doppelrohr verschiebbaren Dosenfuss sowie das aus dem Dosen-Grundkörper herausragende Anschlussstück - dieses ist in der Dose fixiert - entfällt nun beim Verschrauben des Innenrohrs das Herausnehmen und Zurückführen des Anschlussstücks in die Dose. Der Dosenfuss weist am Übergang vom Kupplungsteil zum Schaft eine radial umlaufende Einkerbung auf, die es erlaubt, den an sich steifen Schaft nach allen Richtungen, abweichend von der Axialachse des Dosenfusses, in gewissem Bereich zu verbiegen. Die Biegsamkeit ergibt sich aus der Dünnwandigkeit des Dosenfusses im Bereich der Einkerbung. Somit erreichte man eine Erleichterung der Montage, und es wurde ermöglicht, das Doppelrohr auch gebogen an die Dose heranzuführen.

Ein Dosenfuss mit verbesserter Flexibilität des Schaftes ist im Prospekt JRG Sanipex® - Calor der J.+ R. Gunzenhauser AG, Sissach/CH offenbart. Der sich an das Kupplungsteil anschliessende Schaft ist balgförmig gestaltet und kann somit in einem weiteren Radius gebogen und in Richtung zum Kupplungsteil zusammengestaucht werden. Am Dosen-Grundkörper und an der dem Dosen-Grundkörper zugewandten Partie des Kupplungsteils des Dosenfusses sind zueinander komplementäre, umlaufende Absatzkanten vorgesehen, so dass der Dosenfuss in den Dosen-Grundkörper in einem kurzen Bereich einsteckbar ist und die Dose quasi auf dem Dosenfuss formschlüssig aufsitzt. Am auslaufenden Schaftende ist eine übergestülpte, ringförmige und im lichten Durchmesser verengte Manschette angeordnet, welche die Funktion hat, das Leerrohr klemmend zu umfassen und zu haltern.

Einen ähnlichen Dosenfuss beinhaltet die EP-A-0 538 197, wobei hier ein kurzer, balgförmiger Abschnitt am Übergang zwischen dem Kupplungsteil und dem Schaft vorgesehen ist. Zwischen dem Dosen-Grundkörper und dem Kupplungsteil existiert wiederum eine formschlüssig aufsetzende Steckverbindung. Am auslaufenden Schaftende hat man ein als offenen Ring gestaltetes, klammerförmiges Klemmorgan zum Festhalten des Leerrohres angeordnet. Dieses Klemmorgan ist über eine flexible Lasche mit dem Schaft verbunden. Innerlich besitzt das Klemmorgan einen radial umlaufenden, erhabenen Steg, der die lichte Weite des Klemmorgans verengt und somit des Leerrohr fester umschliesst.

Auch die zuletzt erwähnten Dosenfüsse weisen hinsichtlich ihrer Flexibilität, der Abdichtung zum Dosen-Grundkörper und zum Leerrohr sowie bezüglich ihres Herstellungsaufwands noch mehrere Unvollkommenheiten auf.

Das Dokument EP-A-0 538 197 offenbart eine Verbindungseinrichtung gemäß dem Oberbegriff des Anspruchs 1.

### Aufgabe der Erfindung

Resümierend verbleibt festzustellen, dass die bis dato bekannten Dosenfüsse allesamt nicht als vollauf befriedigend angesehen werden können. Der Erfindung liegt daher das Problem zugrunde, einen Dosenfuss mit verbesserter Flexibilität zu schaffen. Zugleich soll die solide Abdichtung einerseits zwischen dem Kupplungsflansch des Dosenfusses und der Flanschpartie des Dosen-Grundkörpers sowie andererseits zwischen dem Endstück des Schafts des Dosenfusses und dem Leerrohr gewährleistet sein. Ein weiteres Ziel der Erfindung ist es, die Effizienz bei der Fertigung der Dosenfüsse zu steigern und ein Verfahren zur massenweisen Herstellung vorzuschlagen.

Die Dosenfüsse sollen an Dosen-Grundkörpern ansetzbar sein, die eine oder mehrere Flanschpartien aufweisen, d.h. sich für Einfach- oder Mehrfachdosen eignen. Bevorzugt ist der für einen Dosen-Grundkörper konzipierte Dosenfuss, der dem Typ gemäss dem EP-B-0 354 177 entspricht, wo der untere Ast des im Dosen-Grundkörper fixierten Anschlussstücks aus dem Dosen-Grundkörper herausragt und die Verbindungsstelle mit dem Innenrohr vom Dosenfuss geschützt wird. Der Dosenfuss muss aber gleichfalls für Anschlusseinrichtungen geeignet sein, die ein vollständig im Dosen-Grundkörper sitzendes, nicht herausragendes Anschlussstück besitzen.

Es versteht sich, dass der Dosenfuss eine den Einbaubedingungen entsprechende Stabilität und Materialbeständigkeit aufweisen muss.

Die Erfindung wird von den Merkmalen des Anspruchs 1 definiert.

Die prinzipielle Lösung der Erfindung besteht darin, dass im Schaft des aus steifem Primärmaterial bestehenden Dosenfusses zumindest ein ringförmiges Rohrsegment aus elastischem, gummiähnlichem Material vorgesehen ist, an das sich beiderseits Primärmaterial anschliesst. Nachstehend wird für das gummiähnliche Marerial vereinfacht der Begriff Gummimaterial verwendet, ohne sich damit nur auf Gummi einschränken zu wollen.

In einer besonders vorteilhaften Konstruktion besteht der Dosenfuss aus einem aus dem Primärmaterial gebildeten, skelettartigen Primärteil und einem aus dem Gummimaterial gebildeten, ebenfalls skelettartigen Sekundärteil, die im Zweikomponentenspritzverfahren hergestellt werden. Der Schaft des Dosenfusses weist mehrere ringförmige Rohrsegmente auf, die alternierend abwechselnd aus Primär- bzw. aus Gummimaterial bestehen, wobei die jeweiligen Materialübergänge miteinander verbunden sind.

Es ist von Vorteil, die ringförmigen, beabstandeten Rohrsegmente des Primärteils mit Verbindungsstegen zu überbrücken sowie Eingriffskonturen zur Fixierung des Primärteils beim Spritzen des Gummimaterials und Überströmfugen für das Gummimaterial vorzusehen. Aus Gummimaterial - zugehörig zum Sekundärteil - bestehen auch die Zwischendichtung und die Abschlussdichtung. Die Zwischendichtung ist stirnseitig am Kupplungsflansch vorgesehen, so dass dieser bei angesetztem Dosenfuss an der Flanschpartie des Dosen-Grundkörpers dichtend anliegt. Die Abschlussdichtung ist an das letzte, äussere Rohrsegment angesetzt und besitzt eine im lichten Durchmesser verengte Gestalt oder eine lippenförmige Dichtkante. Eine effiziente Produktion des Dosenfusses erzielt man, wenn das Sekundärteil in der zweiten Phase des Spritzverfahrens als zusammenhängendes Gebilde aus Ringsegmenten, der Zwischendichtung und der Abschlussdichtung mit Überbrückungen hergestellt wird. Die Überbrückungen innerhalb des Primär- und des Sekundärteils dienen der Anspeisung der einzelnen Segmentteile beim Zweikomponentenspritzen.

Bei Erhöhung der aus dem Gummimaterial bestehenden Rohrsegmente über die Rohrsegmente des Primärteils hinaus erzielt man eine gute Griffigkeit des mit der Hand an den Dosen-Grundkörper anzukuppelnden Dosenfusses. Als Primärmaterial haben sich Thermoplaste, insbesondere Polypropylen, und als Sekundärmaterial eine Art Weichgummi, insbesondere thermoplastisches Elastomer bewährt.

Dank der Erfindung steht nun ein Dosenfuss mit leicht - in beiden Achsen - biegbarem Schaft und einer soliden Abdichtung gegenüber dem Dosen-Grundkörper und dem Leerrohr zur Verfügung. Hierdurch ist ein enger Anbindungsradius des zuführenden Doppelrohrs ohne grosse Krafteinwirkung auf die Flanschpartie des Dosen-Grundkörpers möglich. Die verbesserte Abdichtung ist besonders bei beginnendem Wasseraustritt infolge eines Schadens von Vorteil, so dass das Wasser innerhalb des Leerrohrs gehalten und abgeführt wird und damit besonders sensible Bausubstanz - z.B. eine Holzverkleidung - nicht in Mitleidenschaft gezogen wird. Der erfindungsgemässe Dosenfuss lässt sich überdies bei der Montage ausgezeichnet handhaben und erlaubt eine rationelle sowie kosteneffiziente Herstellung in der Serienproduktion. Schliesslich eröffnet sich die Möglichkeit einer augenfälligen und kennzeichnenden Farbgestaltung.

### Zeichnungen und Ausführungsbeispiel

Anhand der beiliegenden Zeichnungen erfolgt nachstehend die detaillierte Beschreibung eines Ausführungsbeispiels des geschaffenen Dosenfusses, wobei abschliessend mögliche Modifikationen erwähnt werden. Es zeigen:

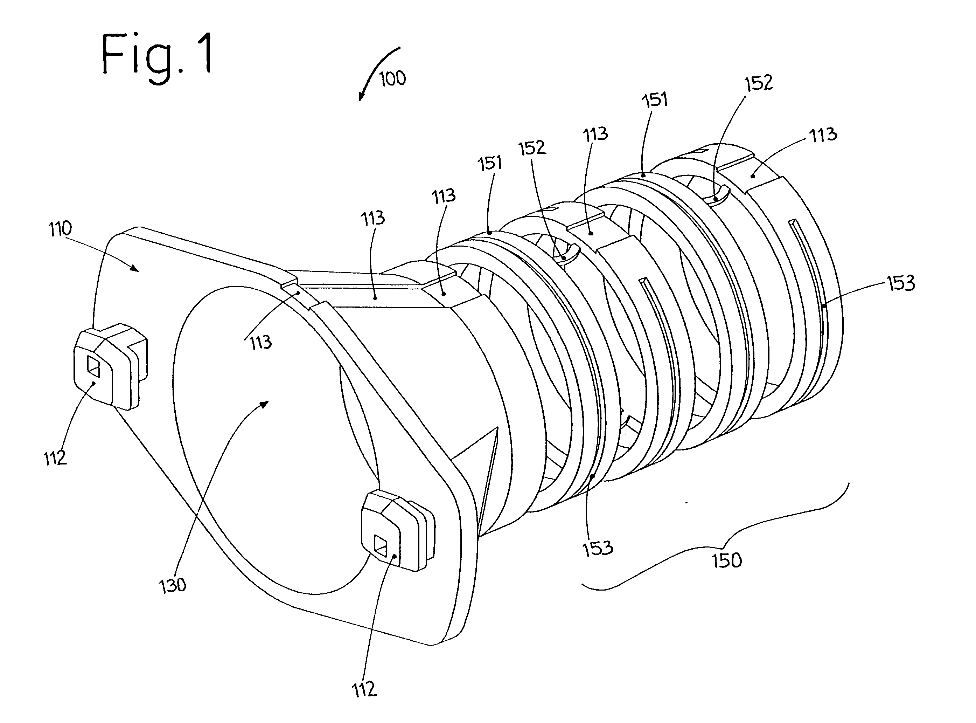

- Figur 1:: eine Perspektivansicht des skelettartigen Primärteils aus dem Primärmaterial;

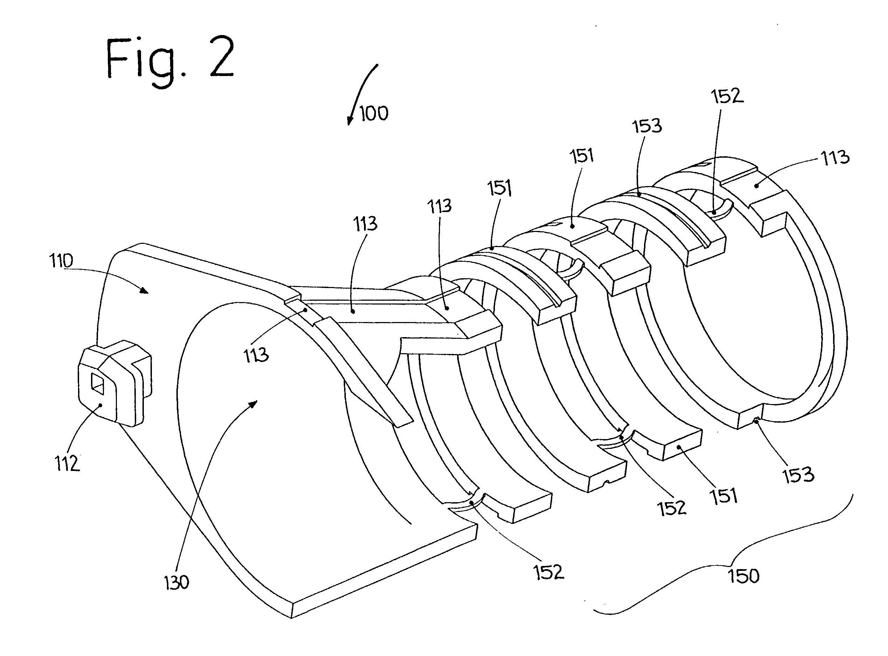

- Figur 2:: die Ansicht gemäss Figur 1 längs aufgeschnitten;

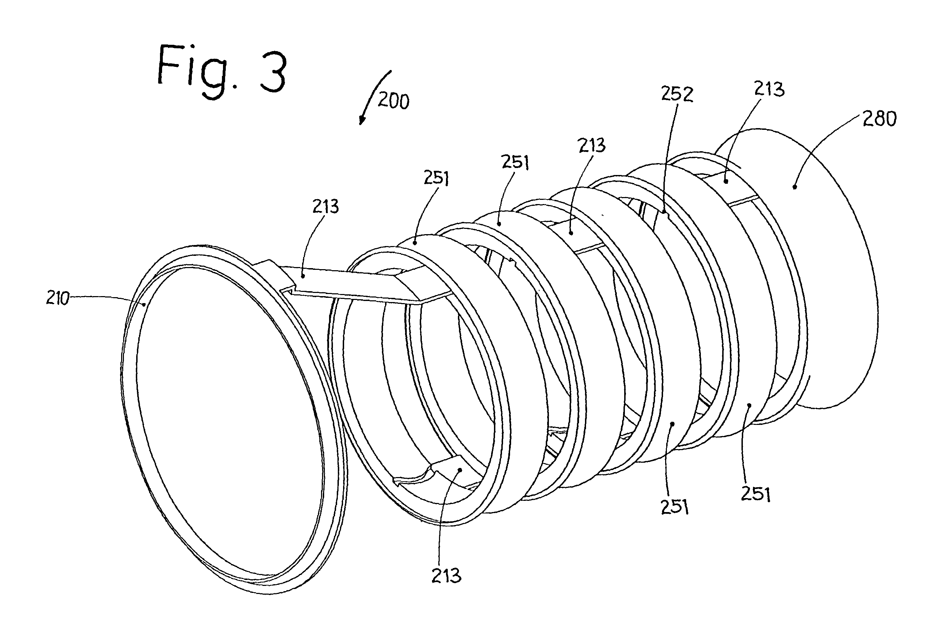

- Figur 3:: eine Perspektivansicht des skelettartigen Sekundärteils aus dem Gummimaterial;

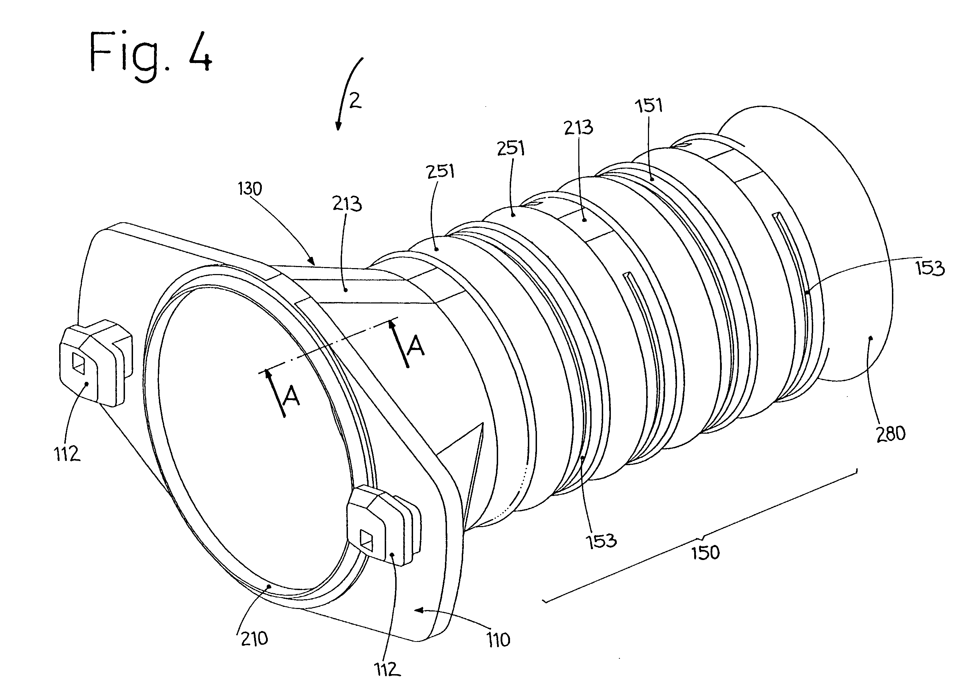

- Figur 4:: eine Perspektivansicht des fertigen Dosenfusses;

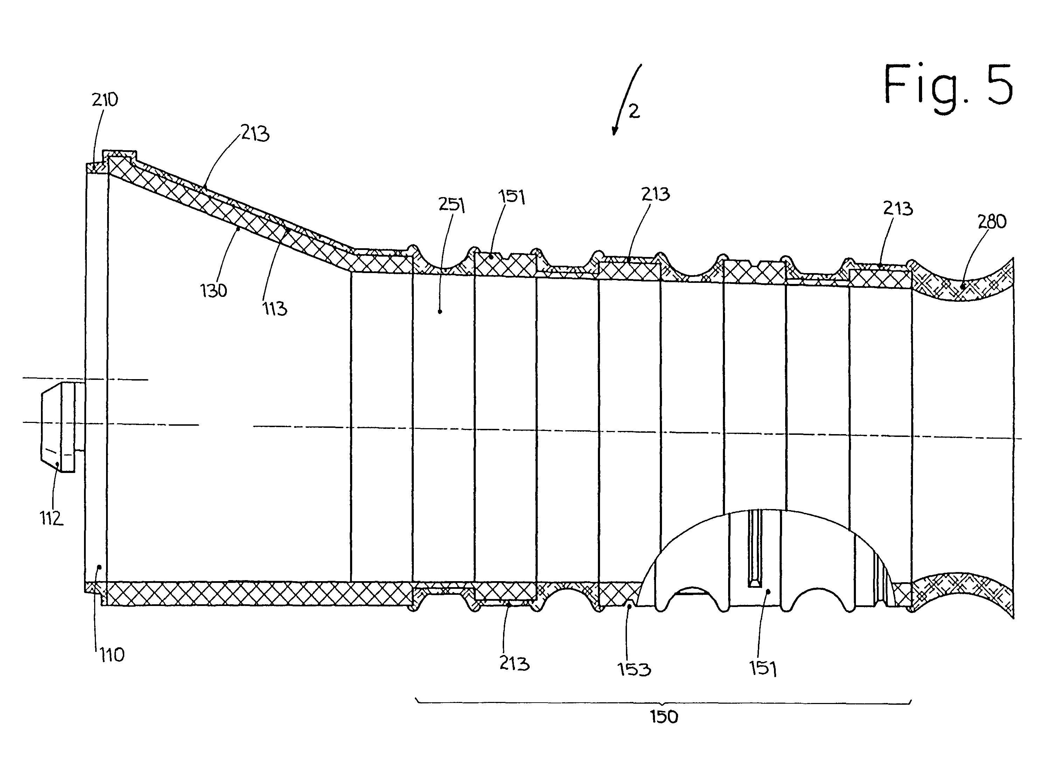

- Figur 5:: einen axial geführten Vertikalschnitt durch den Dosenfuss gemäss Figur 4;

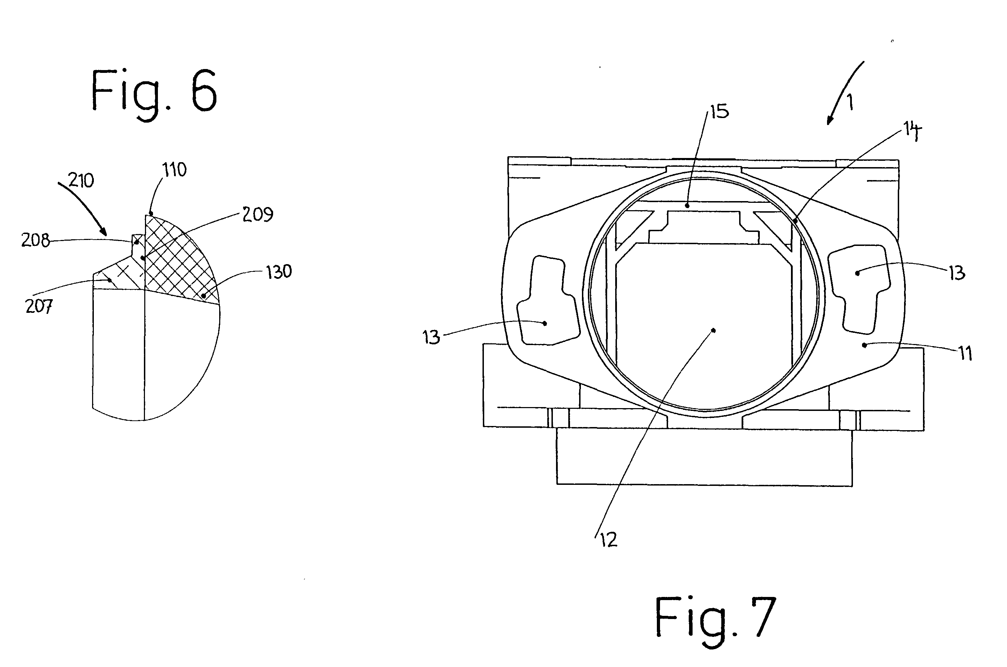

- Figur 6:: die Zwischendichtung am Kupplungsteil des Dosenfusses gemäss dem Schnitt A-A in Figur 4;
- Figur 7:: eine Draufsicht auf die Flanschpartie des Dosen-Grundkörpers;

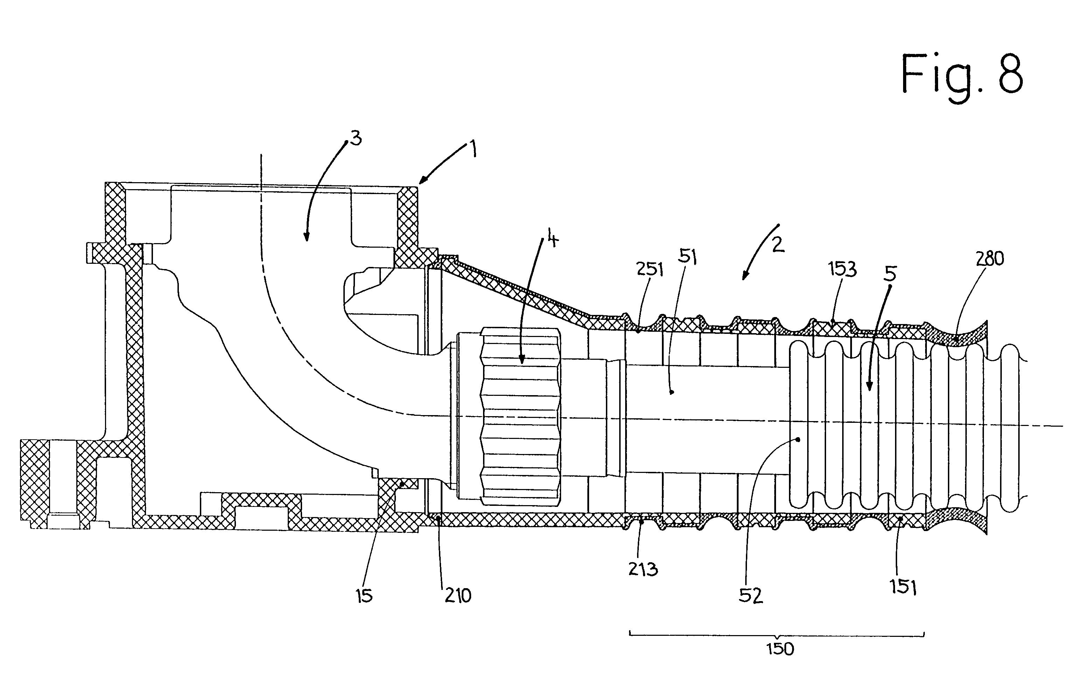

- Figur 8:: einen axial geführten Vertikalschnitt durch die komplette Dose mit angeschraubtem Doppelrohr;

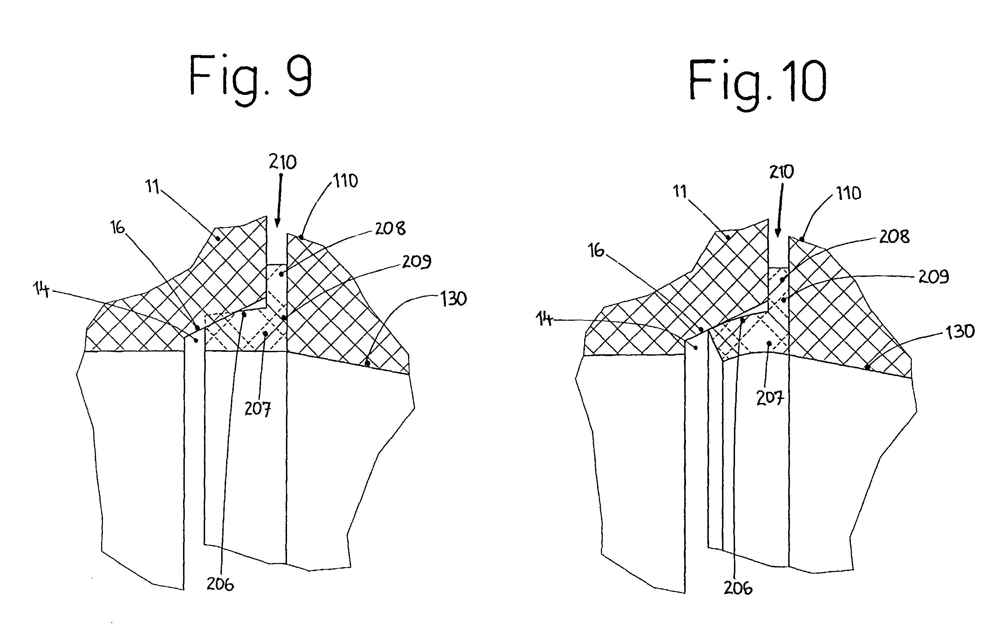

- Figur 9:: einen Detailschnitt mit der Zwischendichtung gemäss den Figuren 4 und 6 in der theoretischen Überlappung in der Dichtungsnut an der Flanschpartie des Dosen-Grundkörpers und
- Figur 10:: die Zwischendichtung gemäss Figur 9 mit der reellen Durchbiegung der Dichtungslippe.

### Figuren 1 und 2

Das Primärteil **100 -** dieses wird innerhalb eines möglichlicherweise angewendeten Zweikomponentenspritzverfahrens als erstes gefertigt - besteht aus einem an sich bekannten stirnseitig angeordneten Kupplungsflansch **110** und dem zum Schaft **150** sich etwa konisch verjüngenden Trichterstück **130.** Am Kupplungsflansch **110** befinden sich zwei gegenüberliegende und zueinander verdreht positionierte Kupplungsnocken **112.** Der Schaft **150** setzt sich aus mehreren, ringförmigen Rohrsegmenten **151** zusammen, zwischen denen ein Abstand besteht und die von bügelförmigen Verbindungsstegen **152** überbrückt werden. Durch die Bügelform der Verbindungsstege **152** ist die Elastizität zwischen den Rohrsegmenten **151** gewährleistet. Die Verbindungsstege **152** zwischen dem Trichterstück **130** und dem ersten, benachbarten Rohrsegment **151** und den weiteren Rohrsegmenten **151** sind abwechselnd abgeordnet - hier jeweils ein Verbindungssteg **152** oben und der Verbindungssteg **152** zwischen den nächsten Rohrsegmenten **151** unten, während der Verbindungssteg **152** zum übernächsten Rohrsegment **151** wieder unten angeordnet ist. Die wechselnde Anordnung der Verbindungsstege **152** mindert den an sich negativen Einfluss der Verbindungsstege **152** auf die Elastizität des Primärteils **100** und somit auch des kompletten Dosenfusses. Diese Verbindungsstege **152** halten das Trichterstück **130** mit allen Rohrsegmenten **151** zusammen, ermöglichen aber die spätere Flexibilität des fertigen Dosenfusses in beiden Achsen. Die Verbindungsstege **152** liegen in der Ebene der Innenwandung, nehmen aber nicht die gesamte Dicke der Rohrsegmente **151** ein. Hauptfunktion der Verbindungsstege **152** ist jedoch die Anspeisung der Rohrsegmente **151** während des Spritzgiessens.

Äusserlich besitzen die Rohrsegmente **151** eine Eingriffskontur **153 -** hier in Form einer radial fast gänzlich umlaufenden Nut. Diese Eingriffskontur **153** dient dazu, die Rohrsegmente **151** im Spritzwerkzeug während des Spritzens des Sekundärteils mit dem Gummimaterial zu fixieren, damit die Rohrsegmente **151** nicht von dem Druck des eingespritzten Gummimaterials verschoben werden.

Von der Oberkante des Kupplungsflansches **110** verläuft eine äussere, axial orientierte Überströmnut **113,** die sich zunächst über das Trichterstück **130** und dann auch über alle anschliessenden Rohrsegmente **151** fortsetzt. Auf den Rohrsegmenten **151** allerdings wechselt die Überströmnut **113** zwischen benachbarten Rohrsegmenten **151** jeweils von oben nach unten und wieder nach oben. Dies begünstigt den Fluss des Gummimaterials beim Spritzen des Sekundärteils.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Be-zeichnung von Bauteilen in nachfolgenden Figuren zumeist verzichtet, sofern zeichnerisch eindeutig erkennbar ist, dass es sich um "wiederkehrende" Bauteile handelt.

### Figuren 3 und 6

Das Sekundärteil **200** existiert in der gezeigten Weise als separates Teil nicht, sondern wird auf das zuvor erzeugte Primärteil **100** aufgespritzt. Die skelettartige Darstellung des Sekundärteils **200** erfolgt allein zur Veranschaulichung des strukturmässigen Aufbaus des gesamten Dosenfusses und seiner Herstellung.

Das Sekundärteil **200** nimmt zusätzlich zu den Randbereichen - dort entsteht die Zwischendichtung **210** und die Abschlussdichtung **280** - die am Primärteil **100** verbliebenen Freiräume ein. Zuvorderst befindet sich die Zwischendichtung **210,** an die sich wiederum mehrere Ringsegmente **251** aus Gummimaterial, entsprechend den Zwischenräumen zwischen den Rohrsegmenten **151,** anschliessen. Mit dem letzten Ringsegment **251** hängt die manschettenartige Abschlussdichtung **280** zusammen.

Komplementär zur Überströmnut **113** im Primärteil **100** ist am Sekundärteil **200** eine mehrfach unterbrochene Verbindungslasche **213** vorhanden. Zunächst erstreckt sich die Verbindungslasche **213** oben von der Zwischendichtung **210** zum ersten, benachbarten Ringsegment **251,** welches sich im fertigen Dosenfuss an das Trichterstück **130** anschliesst. Analog zum Wechsel der Überströmnut **113** in den Rohrsegmenten **151** wechseln auch die Abschnitte der Verbindungslasche **213** zwischen den jeweils benachbarten Ringsegmenten **251** von oben nach unten. So gibt es je einen unteren Abschnitt der Verbindungslasche **213** zwischen dem ersten und dem zweiten sowie zwischen dem dritten und vierten Ringsegment **251.** Obenliegende Abschnitte der Verbindungslasche **213** sind demnach zwischen dem zweiten und dem dritten Ringsegment **251** sowie zwischen dem vierten Ringsegment **251** und der Abschlussdichtung **280** vorhanden. Die Verbindungsstege **152** sind in den Ringsegmenten **251** eingebettet, so dass an diesen Stellen der Querschnitt der Ringsegmente **251** um den Betrag der Verbindungsstege **152** gemindert ist, ohne jedoch das einzelne Ringsegment **251** vollständig zu unterbrechen. In den Ringsegmenten **251** gibt es quasi Furchen **252,** die von den Verbindungsstegen **152** ausgefüllt werden. Die Ringsegmente **251** sind radial konkav - weisen quasi eine umlaufende Nut auf.

Die ringförmige Zwischendichtung **210** besitzt im Querschnitt etwa die Gestalt eines Winkelprofils mit einer auf dem Kupplungsflansch **110** aufsetzenden Ringfläche **209,** einer nach aussen weisenden, radial umlaufenden Aufsetzfläche **208** und einer radial umlaufenden, kegelstumpfförmigen Dichtungslippe **207.** An der Dichtungslippe **207** befindet sich eine konische Dichtungsflanke **206,** die sich zur Längsachse des Dosenfusses orientiert.

Die Abschlussdichtung **280** besitzt äusserlich die Form eines verbreiterten Ringsegments mit einer radial konkaven Kontur. Innerlich ist die Abschlussdichtung **280** konvex und verengt sich somit in ihrer lichten Weite, um das später einzuführende Leerrohr fester und dichtend zu umschliessen.

### Figuren 4 und 5

Nach Beendigung der Herstellung des Sekundärteils **200,** welches innerhalb des eventuell angewandten Zweikomponentenspritzverfahrens in der Werkzeugform an das darin befindliche Primärteil **100** angespritzt wird, erhält man den kompletten Dosenfuss **2.** Im gezeigten Beispiel setzt sich der Dosenfuss **2** aus einem Primärteil **100** mit vier Rohrsegmenten **151** und dem Sekundärteil **200** mit ebenfalls vier Ringsegmenten **251** zusammen. Die jeweiligen Berührungsflächen zwischen den Rohrsegmenten **151** und den Ringsegmenten **251** sowie alle anderen Berührungsflächen zwischen dem Primärmaterial für das Primärteil **100** und dem Gummimaterial für das Sekundärteil **200** sind unlösbar miteinander verbunden, d.h. verklebt oder thermoplastisch zusammengeschweisst. Frontseitig, die Durchgangsöffnung des Dosenfusses **2** umgebend, ist die Zwischendichtung **210** auf dem Kupplungsflansch **110** angeordnet, während der Schaft **150** hinten mit der Abschlussdichtung **280** endet.

Zur Verbesserung der Griffigkeit des Dosenfusses **2** überragen die äusseren, radialen Ränder der Ringsegmente **251** die Rohrsegmente **151** im Durchmesser, so dass beim Ergreifen des Dosenfusses **2** das rutschfestere Gummimaterial des Sekundärteils **200** mit der Handfläche in Kontakt kommt. Hierdurch lässt sich der Dosenfuss **2** auch mit feuchten oder öligen Händen mit dem Dosen-Grundkörper gut kuppeln. Die konkave Aussenkontur der Ringsegmente **251** - quasi durch eine Radialnut erreicht - ergibt den Freiraum beim elastischen Verformen des Schafts **150** des Dosenfusses **2** in einer oder in beiden Achsen, d.h. beim axialen Zusammendrücken und/oder beim seitlichen Wegbiegen. Hierbei werden die einzelnen Ringsegmente **251** elastisch deformiert - einerseits durch Zusammendrücken und andererseits durch Dehnung -, während die starren Rohrsegmente **151** zusammen mit dem Kupplungsflansch **110** und dem Trichterstück **130** die prinzipielle Formstabilität des Dosenfusses **2** gewährleisten.

### Figur 7

Der Dosen-Grundkörper **1 -** hier zunächst ohne eingesetztes Anschlussstück - besitzt eine an sich bekannte Flanschpartie **11** zum Ansetzen des Kupplungsflansches **110** des Dosenfusses **2.** In der Flanschpartie **11** ist eine mittige, grosse Zugangsöffnung **12** vorhanden, aus der das Anschlussstück herausragt oder in der es versenkt ist. Beiderseits der Zugangsöffnung **12** ist je eine zu den Kupplungsnocken **112** komplementäre Aussparung **13** vorgesehen, so dass der Dosenfuss **2** in der Art eines Bajonettverschlusses an den Dosen-Grundkörper **1** ankuppelbar ist. Die Zugangsöffnung **12** wird von einer konisch angeschrägten Dichtungsnut **14** umgeben. Innerhalb des Dosen-Grundkörpers **1** befinden sich Verstrebungen **15** zur Fixierung des einzusetzenden Anschlussstücks.

### Figur 8

Im montierten Zustand sitzt ein Anschlussstück **3** im Dosen-Grundkörper **1,** dessen einer Ast für den Anschluss des Innenrohrs **51** hier aus der im Dosen-Grundkörper **1** vorhandenen Zugangsöffnung **12** herausragt. Der zweite Ast des Anschlussstücks **3** dient zur mittelbaren oder unmittelbaren Verbindung mit einer Armatur zur Speisung eines Brauchwasser-Verbrauchers. Das Anschlussstück **3** stützt sich innerhalb des Dosen-Grundkörpers **1** an den Verstrebungen **15** ab.

An die Flanschpartie **11** des Dosen-Grundkörpers **1** ist der Dosenfuss **2** angekuppelt, wobei der Trichter **130** des Dosenfusses **2** in sich die Schraubverbindung **4** zwischen dem Innenrohr **51** und dem Anschlussstück **3** aufnimmt. Vom Schaft **150** des Dosenfusses **2** wird das zuführende Ende des Doppelrohrs **5** mit dem äusseren Leerrohr **52** umschlossen.

Die Aufsetzfläche **208** der Zwischendichtung **210** liegt auf dem die Zugangsöffnung **12** umgebenden Rand, und die Dichtungslippe **207** ist dichtend in die Dichtungsnut **14** der Flanschpartie **11** des Dosen-Grundkörpers **1** eingesetzt. Durch die Abschlussdichtung **280** hindurch ragt das zuführende Doppelrohr **5,** wobei das Leerrohr **52** von der verengten Abschlussdichtung **280** eng umschlossen und somit gehalten wird und je nach Zuschnitt mehr oder weniger in den Dosenfuss **2** hineinragt. Die Zwischendichtung **210** sowie die Abschlussdichtung **280** bewirken eine Abdichtung des Inneren der Einrichtung nach aussen.

### Figuren 9 und 10

Es ist von Vorteil, die in der konischen Dichtungsnut **14** der Flanschpartie **11** vorhandene Innenflanke **16** - im Verhältnis zur Dichtungsflanke **206** der Zwischendichtung **210** - steiler zu gestalten. Somit nähert sich die Innenflanke **16** der theoretischen Längsachse durch den Dosenfuss **2** steiler an, als die Dichtungsflanke **206.** Damit wird gewährleistet, dass auch bei Massungenauigkeiten die Dichtungsflanke **206** stets dichtend an der Innenflanke **16** anliegt, d.h. mit einer Vorspannung gegen die Innenflanke **16** drückt. Bei Undichtheiten in der Einrichtung durch austretendes Wasser würde infolge des Druckanstiegs im Dosen-Grundkörper **1** bzw. im Dosenfuss **2** automatisch die Dichtungslippe **207** mit erhöhter Anpresskraft gegen die Innenflanke **16** gepresst werden.

Zum vorbeschriebenen Dosenfuss sind weitere konstruktive Variationen realisierbar. Hier ausdrücklich erwähnt seien noch:
- Die Abschlussdichtung **280** kann innerlich anstelle der nach innen gerichteten konvexen Kontur auch eine die lichte Weite verengende Dichtungslippe aufweisen.
- Im Prinzip ist auch ein Dosenfuss **2** mit nur einem aus Gummimaterial bestehenden Ringsegment **251** denkbar, welches innerhalb des Schafts **150** integriert ist. Dieses Ringsegment **251** könnte sogleich am Übergang vom Kupplungsflansch **110** zum Trichterstück **130** bzw. zwischen dem Trichterstück **130** und dem Schaft **150** oder innerhalb des dann zweigeteilten Schafts **150** angeordnet sein.
- Auf die Verbindungsstege **152** und die Verbindungslaschen **213** kann man zumindest teilweise oder sogar gänzlich verzichten. Diese Konturen bzw. Elemente erweisen sich jedoch bei der Anwendung des Zweikomponentenspritzverfahrens als vorteilhaft.
- Die gleichzeitige Anbringung der Zwischendichtung **210** und eventuell auch der Abschlussdichtung **280** sind Optionen zur Verbesserung der Abdichtung, aber nicht Bedingung für die Flexibilität des Dosenfusses **2.** Die Flexibilität des Dosenfusses **2,** die Zwischendichtung **210** und die Abschlussdichtung **280** sind unabhängig voneinander oder beliebig miteinander kombiniert realisierbar.
- Der Dosenfuss **2** muss kein sich konisch erweiterndes Trichterstück **130** aufweisen; dies ist anhängig von der Dimension der Zugangsöffnung **12** und der Grösse sowie der Positionierung der Schraubverbindung **4.**
- Realisierbar wäre es auch, innerhalb des Trichterstücks **130** zumindest ein zusätzliches oder das alleinige elastische Ringsegment **251** vorzusehen.
- Der Dosenfuss **2,** einschliesslich des Schafts **150,** müssen keinen runden Querschnitt besitzen. Wenn die Flexibilität massgeblich ist, sind auch ovale und eckige Querschnittsformen denkbar. Bei gewünschter Abdichtung an der Einführung des Doppelrohrs **5** mittels einer Abschlussdichtung **280** wird man dann allerdings dieser Abschlussdichtung **280** eine Innenkontur geben, die das runde Doppelrohr **5** halternd und dichtend umschliesst.
- Für die Gestaltung der Zwischendichtung **210** gilt generell, dass durch die geometrische Form der Dichtungslippe **207** und der Dichtungsnut **14** die Dichtungsflanke **206** mit Vorspannung an der Innenflanke **16** anliegen muss. Dies ist Voraussetzung für die Dichtfunktion; Massungenauigkeiten werden kompensiert und im Schadenfall durch den Druckanstieg die Dichtungslippe **207** stärker an die Innenflanke **16** gepresst.
- Der Dosenfuss **2** könnte als Fertigteil einstückig sein oder aus zwei zusammenfügbaren Halbschalen bestehen, wobei an einer gemeinsamen Trennlinie der Halbschalen auch eine scharnierartige Verbindung in Betracht käme.

## Patentansprüche

1. Einrichtung zur Verbindung mindestens einer flexiblen Kunststoff-Doppel-Rohrleitung (**5**) - gebildet aus einem wasserführenden Innenrohr (**51**) und einem dieses ummantelnden Leerrohr (**52**) - mit mindestens einem Gebrauchswasser-Verbraucher, welche Einrichtung zum direkten oder indirekten Anschluss mindestens einer dem Verbraucher vorgeschalteten Armatur dient,
a) wobei die Einrichtung aus einem Dosen-Grundkörper (**1**) mit einer Flanschpartie (**11**), mindestens einem in den Dosen-Grundkörper (**1**) eingesetzten Anschlussstück (**3**) sowie je einem über jedes Doppelrohr (**5**) schiebbaren bzw. klappbaren, flexiblen Dosenfuss (**2**) besteht,
b) welcher Dosenfuss (**2**) an einem Ende einen Kupplungsflanson (**110**) aufweist, der mit der Flanschpartie (**11**) verbindbar ist, und
c) welcher Dosenfuss (**2**) am anderen Ende einen Schaft (**150**) oesitzt,
**dadurch gekennzeichnet,**
d) **dass** im aus formstabilem Primärmaterial bestehenden Dosenfuss (**2**) hinter dem Kupplungsflansch (**110**) zumindest ein Ringsegment (**251**) aus bei Raumtemperatur elastischem, gummiartigem Material vorgesehen ist und sich beiderseits an das Ringsegment (**251**) Primärmaterial anschliesst,
e) **dass** am Kupplungsflansch (**110**), dessen Eingangsöffnung umgebend, stirnseitig eine Zwischendichtung (**210**) aus dem elastischen, gummiartigen Material vorgesehen ist, welche dazu bestimmt ist, die Verbindung zwischen dem Dosen-Grundkörper (**1**) und dem Dosenfuss (**2**) - d.h. zwischen der Flanschpartie (**11**) und dem Kupplungsflansch (**110**) - abzudichten,
f) und **dass** an den Übergängen zwischen dem Primärmaterial und dem elastischen gummiartigen Material Kleb- oder thermoplastische Schweissverbindungen bestehen.

2. Einrichtung gemäss Anspruch 1, **dadurch gekennzeichnet, dass**
a) am freien Ende des Schafts (**150**) eine Abschlussdichtung (**280**) aus dem elastischen, gummiartigen Material vorgesehen ist, welche die Funktion hat, das eindringende Doppelrohr (**5**) klemmend und dichtend zu umfassen, wobei
b) am freien Ende des Schafts (**150**) an den Übergängen zwischen dem Primärmaterial und dem gummiartigen Material Kleb- oder thermoplastische Schweissverbindungen bestehen.

3. Einrichtung nach einem der Ansprüche 1 oder 2, **dadurch gekennzeichnet, dass**
a) der Dosenfuss (**2**) sich aus einem Primärteil (**100**) und einem mit diesem verbundenen Sekundärteil (**200**) zusammensetzt, wobei das erste aus dem Primärmaterial und das zweite aus dem elastischen, gummiartigen Material besteht und
b) der Schaft (**150**) aus mehreren, alternierend aneinandergefügten Rohrsegmenten (**151**) und Ringsegmenten (**251**) gebildet ist, wobei
c) die Rohrsegmente (**151**) zum Primärteil (**100**) und die Ringsegmente (**251**) zum Sekundärteil (**200**) gehörig sind.

4. Einrichtung nach Anspruch 3, **dadurch gekennzeichnet, dass**
a) die Rohrsegmente (**151**) zueinander beabstandet und durch elastische Verbindungsstege (**152**) aus Primärmaterial miteinander skelettartig verbunden sind, wobei die Verbindungsstege (**152**) von der Anspeisung während des Plastspritzens stammen, und
b) zuvorderst, dem Dosen-Grundkörper (**1**) zugewandt, das Primärteil (**100**) den Kupplungsflansch (**110**) aufweist, und
c) sich an den Kupplungsflansch (**110**) ein Trichterstück (**130**) anschliesst und diesem Trichterstück (**130**) ein erstes Rohrsegment (**151**) folgt, das ebenfalls mit dem Trichterstück (**130**) durch einen Verbindungssteg (**152**) überbrückt ist, und
d) am letzten Rohrsegment (**151**) die Abschlussdichtung (**280**) angeordnet ist, und
e) am Kupplungsflansch (**110**) Kupplungsnocken (**112**) zum Eingriff in die Flanschpartie (**11**) des Dosen-Grundkörpers (**1**) vorhanden sind.

5. Einrichtung nach Anspruch 4, **dadurch gekennzeichnet, dass**
a) beginnend am Kupplungsflansch (**110**) eine axial verlaufende Überströmnut (**113**) zur Anspeisung für das Plastspritzen vorhanden ist, die sich über das Trichterstück (**130**) fortsetzt und sich dann jeweils unterbrochen auch über die Rohrsegmente (**151**) axial erstreckt, und
b) die Rohrsegmente (**151**) äusserliche Eingriffskonturen (**153**) zur Fixierung beim Plastspritzen aufweisen, wobei die Eingriffskonturen (**153**) vorzugsweise als zumindest partiell radial umlaufende Nuten gestaltet sind.

6. Einrichtung nach den Ansprüchen 4 und 5, **dadurch gekennzeichnet, dass**
a) die Verbindungsstege (**152**) und die Abschnitte der Überströmnut (**113**) zu benachbarten Rohrsegmenten (**151**) bzw. Ringsegmenten (**251**) hin jeweils radial um ca. 180° versetzt angeordnet sind, und
b) die Verbindungsstege (**152**) eine geringere Dicke als die durch die Überströmnut (**113**) reduzierte Wandung der Rohrsegmente (**151**) aufweisen, und
c) die Verbindungsstege (**152**) bogenförmig ausgebildet sind.

7. Einrichtung nach einem der Ansprüche 5 oder 6, **dadurch gekennzeichnet, dass**
a) das Sekundärteil (**200**) - entsprechend der Anzahl der Rohrsegmente (**151**) - aus einer Vielzahl von Ringsegmenten (**251**) besteht und
b) die Ringsegmente (**251**) sowie die Zwischendichtung (**210**) und die Abschlussdichtung (**280**) mit zu den Abschnitten der Überströmnut (**113**) analogen Verbindungslaschen (**213**) überbrückt sind, wobei
c) die Verbindungslaschen (**213**) von der Anspeisung während des Plastspritzens stammen und
d) die Ringsegmente (**251**) äusserlich konkav ausgebildet sind und
e) die Ringsegmente (**251**) in ihrem Aussendurchmesser an den Übergängen die Rohrsegmente (**151**) überragen, so dass beim Ergreifen des Dosenfusses (**2**) das rutschfeste gummiartige Material des Sekundärteils (**200**) deutlich mit der Handfläche in Kontakt kommt.

8. Einrichtung nach einem der Ansprüche 2 bis 7, **dadurch gekennzeichnet, dass**
a) die Abschlussdichtung (**280**) innerlich konvex ist oder eine erhabene Dichtkante aufweist, um die lichte Weite zu verengen und das eindringende Doppelrohr (**5**) mit dem äusseren Leerrohr (**52**) haltend und abdichtend zu umfassen und
b) die Abschlussdichtung (**280**) äusserlich konkav ist.

9. Einrichtung nach einem der Ansprüche 1 bis 8, **dadurch gekennzeichnet, dass**
a) am Dosen-Grundkörper (**1**) zur partiellen Aufnahme der Zwischendichtung (**210**) eine Dichtungsnut (**14**) vorhanden ist, welche die Zugangsöffnung (**12**) in der Flanschpartie (**11**) radial umgibt, und
b) die Dichtungsnut (**14**) eine Innenflanke (**16**) aufweist.

10. Einrichtung nach Anspruch 9, **dadurch gekennzeichnet, dass**
a) die Zwischendichtung (**210**) eine Dichtungslippe (**207**) mit einer Dichtungsflanke (**206**) besitzt, wobei
b) die Dichtungslippe (**207**) bei einem an den Dosen-Grundkörper (**1**) angesetzten Dosenfuss (**2**) mit Vorspannung an der Innenflanke (**16**) der Dichtungsnut (**14**) anliegt und
c) hierdurch die Dichtheit gewährleistet ist, Massungenauigkeiten kompensiert werden sowie im Schadenfall durch Druckanstieg die Dichtungslippe (**207**) stärker an die Innenflanke (**16**) gepresst wird.

11. Einrichtung nach Anspruch 10, **dadurch gekennzeichnet, dass**
a) die Zwischendichtung (**210**) ausser der Dichtungslippe (**207**) eine radial umlaufende, äussere Aufsetzfläche (**208**) und eine Ringfläche (**209**) aufweist und
b) die Aufsetzfläche (**208**) bei einem an den Dosen-Grundkörper (**1**) angesetzten Dosenfuss (**2**) zwischen die Flanschpartie (**11**) und den Kupplungsflansch (**110**) zu liegen kommt und
c) zwischen der Ringfläche (**209**) und dem Kupplungsflansch (**110**) eine flächige Kleb- oder thermoplastische Schweissverbindung besteht.

12. Einrichtung nach Anspruch 10 oder 11, **dadurch gekennzeichnet, dass**
a) die an der Dichtungslippe (**207**) der ringförmigen Zwischendichtung (**210**) vorhandene Dichtungsflanke (**206**) konisch ist und sich zur Längsachse des Dosenfusses (**2**) orientiert und
b) die in der konischen Dichtungsnut (**14**) der Flanschpartie (**11**) vorhandene Innenflanke **16**) - im Verhältnis zur Dichtungsflanke (**206**) der Zwischendichtung (**210**) - steiler gestaltet ist, d.h. die Innenflanke (**16**) nähert sich der theoretischen Längsachse durch den Dosenfuss (**2**) steiler an als die Dichtungsflanke (**206**).

13. Einrichtung nach einem der Ansprüche 3 bis 12, **dadurch gekennzeichnet, dass**
a) der zum Anschliessen an das wasserführende Innenrohr (**51**) bestimmte Ast des Anschlussstücks (**3**) aus dem Dosen-Grundkörper (**1**) herausragt und
b) die Schraubverbindung (**4**) zwischen dem Innenrohr (**51**) und dem Anschlussstück (**3**) vom Trichterstück (**130**) oder einer sich erweiternden Partie des Dosenfusses (**2**) umschlossen wird und
c) der Dosenfuss (**2**) einstückig ist oder aus zwei zusammenfügbaren Halbschalen besteht, die an einer gemeinsamen Trennlinie miteinander verbunden sind.

14. Einrichtung gemäss einem der vorangehenden Ansprüche, **dadurch gekennzeichnet, dass** der Dosenfuss (**2**) durch ein Zweikomponentenspritzverfahren hergestellt ist.

15. Einrichtung gemäss Anspruch 14, **dadurch gekennzeichnet, dass**
a) in der ersten Phase des Spritzverfahrens das Primärteil (**100**) gespritzt wird und
b) in der zweiten Phase des Spritzverfahrens an das Primärteil (**100**) das Sekundärteil (**200**) angespritzt wird,
c) wobei das Sekundärteil (**200**) zumindest ein Ringsegment (**251**) oder eine Zwischendichtung (**210**) oder eine Kombination beider aufweist und zusätzlich eine Abschlussdichtung (**280**) hat.

16. Einrichtung nach Anspruch 15, **dadurch gekennzeichnet, dass**
a) man zur Anspeisung des Primärteils (**100**) während der ersten Phase des Spritzverfahrens die im Spritzwerkzeug geschaffenen Kanäle nutzt, welche den Verbindungsstegen (**152**) entsprechen, die sich vom Trichterstück (**130**) zum ersten benachbarten Rohrsegment (**151**) sowie zwischen allen benachbarten Rohrsegmenten (**151**) erstrecken und
b) man zur Anspeisung des Sekundärteils (**200**) während der zweiten Phase des Spritzverfahrens die im Primärteil (**100**) in der ersten Phase geschaffene Überströmnut (**113**) nutzt, welche den Verbindungslaschen (**213**) entspricht, die sich von der Zwischendichtung (**210**) zum ersten benachbarten Ringsegment (**251**) sowie zwischen allen benachbarten Ringsegmenten (**251**) und - falls erwünscht - vom äussersten Ringsegment (**251**) zur Abschlussdichtung (**280**) erstrecken.

17. Einrichtung nach Anspruch 16, **dadurch gekennzeichnet, dass** während der zweiten Phase des Spritzverfahrens die an den Rohrsegmenten (**151**) äusserlich vorhandenen Eingriffskonturen (**153**) zur Fixierung der Rohrsegmente (**151**) dienen, um das Verschieben der Rohrsegmente (**151**) im Spritzwerkzeug zu verhindern.

18. Einrichtung nach einem der Ansprüche 15 bis 17, **dadurch gekennzeichnet, dass** das Primärteil (**100**) aus einem Thermoplast - vorzugsweise Polypropylen - und das Sekundärteil (**200**) vorzugsweise aus einem thermoplastischen Elastomer gespritzt werden.

## Claims

1. Device for connecting at least one flexible plastic double pipeline (5) - formed from a water-carrying inner pipe (51) and an empty pipe (52) encasing this inner pipe (51) - having at least one service-water consumer, which device serves for the direct or indirect connection of at least one fitting connected upstream of the consumer,
a) the device consisting of a basic box body (1) with a flange part (11), at least one connection piece (3) inserted into the basic box body (1), and in each case a flexible box foot (2), which can be slipped or folded over each double pipe (5),
b) which box foot (2) has a coupling flange (110) at one end, which coupling flange (110) can be connected to the flange part (11), and
c) which box foot (2) has a shaft (150) at the other end,
**characterized in that**
d) at least one ring segment (251) made of rubber-like material which is elastic at room temperature is provided behind the coupling flange (110) in the box foot (2), which is made of a dimensionally stable primary material, and primary material adjoins the ring segment (251) on both sides,
e) an intermediate seal (210) made of the elastic, rubber-like material is provided at the front end of the coupling flange (110) in such a way as to surround its inlet opening and is intended to seal off the connection between the basic box body (1) and the box foot (2) - i.e. between the flange part (11) and the coupling flange (110),
f) and there are adhesive or thermoplastic welded connections at the transitions between the primary material and the elastic rubber-like material.

2. Device according to Claim 1, **characterized in that**
a) an end seal (280) made of the elastic, rubber-like material is provided at the free end of the shaft (150) and has the function of enclosing the penetrating double pipe (5) in a clamping or sealing manner, in which case
b) there are adhesive or thermoplastic welded connections at the free end of the shaft (150) at the transitions between the primary material and the rubber-like material.

3. Device according to either of Claims 1 and 2,
**characterized in that**
a) the box foot (2) is composed of a primary part (100) and a secondary part (200) connected to this primary part (100), the first part being made of the primary material and the second part being made of the elastic, rubber-like material, and
b) the shaft (150) is formed from a plurality of pipe segments (151) and ring segments (251) joined alternately to one another, in which case
c) the pipe segments (151) belong to the primary part (100) and the ring segments (251) belong to the secondary part (200).

4. Device according to Claim 3, **characterized in that**
a) the pipe segments (151) are at a distance from one another and are connected to one another like a skeleton by elastic connecting webs (152) of primary material, the connecting webs (152) originating from the feeding during the plastic injection moulding, and
b) right at the front, the primary part (100), facing the basic box body (1), has the coupling flange (110), and
c) a funnel piece (130) adjoins the coupling flange (110), and following this funnel piece (130) is a first pipe segment (151) which is likewise bridged together with the funnel piece (130) by a connecting web (152), and
d) the end seal (280) is arranged on the last pipe segment (151), and
e) there are coupling lugs (112) on the coupling flange (110) for engaging in the flange part (11) of the basic box body (1).

5. Device according to Claim 4, **characterized in that**
a) starting at the coupling flange (110), there is an axially running overflow groove (113) for the feeding for the plastic injection moulding, which overflow groove (113) continues via the funnel piece (130) and then also extends axially in each case discontinuously via the pipe segments (151), and
b) the pipe segments (151) have external engagement contours (153) for fixing during the plastic injection moulding, the engagement contours (153) preferably being designed as at least partly radially encircling grooves.

6. Device according to Claims 4 and 5, **characterized in that**
a) the connecting webs (152) and the sections of the overflow groove (113) are arranged so as to be offset in each case radially by about 180° towards adjacent pipe segments (151) and ring segments (251), respectively, and
b) the connecting webs (152) have a smaller thickness than the wall of the pipe segments (151), which is reduced by the overflow groove (113), and
c) the connecting webs (152) are of curved design.

7. Device according to either of Claims 5 and 6,
**characterized in that**
a) the secondary part (200) - in accordance with the number of pipe segments (151) - consists of a multiplicity of ring segments (251), and
b) the ring segments (251) and the intermediate seal (210) and the end seal (280) are bridged with connecting straps (213) analogous to the sections of the overflow groove (113), in which case
c) the connecting straps (213) originate from the feeding during the plastic injection moulding, and
d) the ring segments (251) are of concave design on the outside, and
e) the ring segments (251), in their outside diameter, project beyond the pipe segments (151) at the transitions, so that, when the box foot (2) is taken hold of, the non-slip rubber-like material of the secondary part (200) clearly comes into contact with the hand surface.

8. Device according to one of Claims 2 to 7,
**characterized in that**
a) the end seal (280) is convex on the inside or has a raised sealing edge in order to narrow the inside diameter and to enclose the penetrating double pipe (5) with the outer empty pipe (52) in a retaining and sealing manner, and
b) the end seal (280) is concave on the outside.

9. Device according to one of Claims 1 to 8,
**characterized in that**
a) there is a sealing groove (14) on the basic box body (1) for partially accommodating the intermediate seal (210), which sealing groove (14) radially surrounds the access opening (12) in the flange part (11), and
b) the sealing groove (14) has an inner flank (16).

10. Device according to Claim 9, **characterized in that**
a) the intermediate seal (210) has a sealing lip (207) with a sealing flank (206), in which case
b) the sealing lip (207), when a box foot (2) is attached to the basic box body (1), bears with prestress against the inner flank (16) of the sealing groove (14), and
c) as a result, the tightness is ensured, dimensional inaccuracies are compensated for, and the sealing lip (207) is pressed to a greater degree against the inner flank (16) by pressure increase in the event of damage.

11. Device according to Claim 10, **characterized in that**
a) the intermediate seal (210), in addition to the sealing lip (207), has a radially encircling, outer mounting surface (208) and an annular surface (209), and
b) the mounting surface (208), when a box foot (2) is attached to the basic box body (1), comes to lie between the flange part (11) and the coupling flange (110), and
c) there is a planar adhesive or thermoplastic welded connection between the annular surface (209) and the coupling flange (110).

12. Device according to Claim 10 or 11, **characterized in that**
a) the sealing flank (206) present at the sealing lip (207) of the annular intermediate seal (210) is conical and is oriented relative to the longitudinal axis of the box foot (2), and
b) the inner flank (16) present in the conical sealing groove (14) of the flange part (11) - in relation to the sealing flank (206) of the intermediate seal (210) - is designed to be steeper, i.e. the inner flank (16) approaches the theoretical longitudinal axis through the box foot (2) at a steeper angle than the sealing flank (206).

13. Device according to one of Claims 3 to 12, **characterized in that**
a) that branch of the connection piece (3) which is intended for connecting to the water-carrying inner pipe (51) projects from the basic box body (1), and
b) the screwed connection (4) between the inner pipe (51) and the connection piece (3) is enclosed by the funnel piece (130) or a widening part of the box foot (2), and
c) the box foot (2) is in one piece or consists of two half shells which can be joined together and are connected to one another at a common parting line.

14. Device according to one of the preceding claims, **characterized in that** the box foot (2) is produced by a two-component injection moulding process.

15. Device according to Claim 14, **characterized in that**
a) the primary part (100) is injection moulded in the first phase of the injection moulding process, and
b) the secondary part (200) is injection moulded onto the primary part (100) in the second phase of the injection moulding process,
c) the secondary part (200) having at least one ring segment (251) or an intermediate seal (210) or a combination of the two and also having an end seal (280).

16. Device according to Claim 15, **characterized in that**
a) the channels created in the injection moulding tool, these channels corresponding to the connecting webs (152) which extend from the funnel piece (130) to the first adjacent pipe segment (151) and between all the adjacent pipe segments (151), are utilized for feeding the primary part (100) during the first phase of the injection moulding process, and
b) the overflow groove (113) created in the primary part (100) in the first phase, this overflow groove (113) corresponding to the connecting straps (213) which extend from the intermediate seal (210) to the first adjacent ring segment (251) and between all the adjacent ring segments (251) and - if desired - from the outermost ring segment (251) to the end seal (280), is utilized for feeding the secondary part (200) during the second phase of the injection moulding process.

17. Device according to Claim 16, **characterized in that**, during the second phase of the injection moulding process, the engagement contours (153) present externally on the pipe segments (151) serve to fix the pipe segments (151) in order to prevent the displacement of the pipe segments (151) in the injection moulding tool.

18. Device according to one of Claims 15 to 17, **characterized in that** the primary part (100) is injection moulded from a thermoplastic - preferably polypropylene - and the secondary part (200) is preferably injection moulded from a thermoplastic elastomer.

## Revendications

1. Dispositif pour le raccordement d'au moins un tuyau plastique flexible à doubles parois (5) - formé d'un tuyau intérieur (51) d'alimentation d'eau et d'un tuyau vide (52) entourant celui-ci - à au moins un consommateur d'eau, lequel dispositif servant à la connexion directe ou indirecte d'au moins une robinetterie en amont du consommateur,
a) le dispositif se composant d'un corps de boîte de base (1) avec une partie de bride (11), d'au moins un raccord (3) inséré dans le corps de boîte de base (1), ainsi que d'une embase de boîte (2) flexible pouvant être poussée ou rabattue, sur chaque tuyau à doubles parois (5),
b) laquelle embase de boîte (2) présente à une extrémité une bride d'accouplement (110), qui peut être raccordée à la partie de bride (11), et
c) laquelle embase de boîte (2) présentant à l'autre extrémité une tige (150),
**caractérisé en ce que**
d) dans l'embase de boîte (2) se composant de matériau primaire de forme stable, derrière la bride d'accouplement (110), est prévu au moins un segment annulaire (251) en matériau de type caoutchouc, élastique à température ambiante, et des deux côtés, du matériau primaire se raccorde au segment annulaire (251),
e) au niveau de la bride d'accouplement (110), du côté frontal, entourant son ouverture d'entrée, est prévu un joint intermédiaire (210) se composant du matériau élastique de type caoutchouc, qui est destiné à étanchéiser le raccord entre le corps de boîte de base (1) et l'embase de boîte (2) - c'est-à-dire entre la partie de bride (11) et la bride d'accouplement (110),
f) et **en ce qu'**au niveau des transitions entre le matériau primaire et le matériau élastique de type caoutchouc, sont prévus des raccords soudés thermoplastiques ou collés.

2. Dispositif selon la revendication 1, **caractérisé en ce que**
a) à l'extrémité libre de la tige (150) est prévu un joint de fermeture (280) au matériau élastique de type caoutchouc, qui a pour fonction d'entourer le tuyau à doubles parois pénétrait (5) en l'enserrant et en l'étanchéisant
b) des raccords soudés thermoplastiques ou collés se trouvant à l'extrémité libre de la tige (150) au niveau des transitions entre le matériau primaire et le matériau de type caoutchouc.

3. Dispositif selon l'une quelconque des revendications 1 ou 2, **caractérisé en ce que**
a) l'embase de boîte (2) se compose d'une partie primaire (100) et d'une partie secondaire (200) connectée à celle-ci, la première se composant du matériau primaire et la deuxième du matériau élastique de type caoutchouc et
b) la tige (150) est formée de plusieurs segments de tuyau (151) et segments annulaires (251) introduits les uns contre les autres en alternance,
c) les segments de tuyau (151) appartenant à la partie primaire (100) et les segments annulaires (251) appartenant à la partie secondaire (200).

4. Dispositif selon la revendication 3, **caractérisé en ce que**
a) les segments de tuyau (151) sont espacés les uns des autres et sont connectés les uns aux autres en formant une ossature par des nervures de connexion élastiques (152) en matériau primaire, les nervures de connexion (152) étant créées par de l'alimentation lors de l'injection de plastique, et
b) le plus en avant, du côté du corps de boîte de base (1), la partie primaire (100) présente la bride d'accouplement (110), et
c) une pièce en entonnoir (130) se raccorde à la bride d'accouplement (110) et un premier segment de tuyau (151) suit cette pièce en entonnoir (130), lequel est également relié à la pièce en entonnoir (130) par une nervure de connexion (152), et
d) le joint de fermeture (280) est disposé au niveau du dernier segment de tuyau (151), et
e) des ergots d'accouplement (112) sont prévus au niveau de la bride d'accouplement (110) pour venir en prise dans la partie de bride (11) du corps de boîte de base (1).

5. Dispositif selon la revendication 4, **caractérisé en ce que**
a) en commençant au niveau de la bride d'accouplement (110), une rainure de débordement (113) s'étendant axialement est prévue en vue de l'alimentation pour l'injection de plastique, laquelle se prolonge sur la pièce en entonnoir (130) et s'étend ensuite aussi axialement à chaque fois de manière interrompue sur les segments de tuyau (151), et
b) les segments de tuyau (151) présentent des contours d'engagement extérieurs (153) pour la fixation lors de l'injection de plastique, les contours d'engagement (153) étant de préférence configurés en tant que rainures s'étendant sur la périphérie au moins partiellement radialement.

6. Dispositif selon les revendications 4 et 5,
**caractérisé en ce que**
a) les nervures de connexion (152) et les portions de la rainure de débordement (113) vers les segments de tuyau adjacents (151), respectivement les segments annulaires (251), sont disposées décalées d'environ 180° radialement, et
b) les nervures de connexion (152) présentent une moindre épaisseur par rapport à celle de la paroi des segments de tuyau (151) réduite par la rainure de débordement (113), et
c) les nervures de connexion (152) sont réalisées avec une forme cintrée.

7. Dispositif selon l'une quelconque des revendications 5 ou 6, **caractérisé en ce que**
a) la partie secondaire (200) - correspondant au nombre de segments de tuyau (151) - se compose d'une pluralité de segments annulaires (251) et
b) les segments annulaires (251) ainsi que le joint intermédiaire (210) et le joint de fermeture (280) sont reliés avec des pattes de connexion (213) analogues aux portions de la rainure de débordement (113),
c) les pattes de connexion (213) étant créées de l'alimentation pendant l'injection de plastique et
d) les segments annulaires (251) étant de forme concave à l'extérieur et
e) les segments annulaires (251) dépassant par leur diamètre extérieur les segments de tuyau (151) au niveau des transitions, de sorte que lorsque l'on se saisit de l'embase de boîte (2), le matériau de type caoutchouc antidérapant de la partie secondaire (200) vient nettement en contact avec la paume de la main.

8. Dispositif selon l'une quelconque des revendications 2 à 7, **caractérisé en ce que**
a) le joint de fermeture (280) est convexe à l'intérieur ou présente une arête d'étanchéité saillante, afin de rétrécir le diamètre intérieur et d'entourer en l'enserrant et en l'étanchéisant le tuyau à doubles parois pénétrant (5) avec le tuyau vide extérieur (52), et
b) le joint de fermeture (280) est concave à l'extérieur.

9. Dispositif selon l'une quelconque des revendications 1 à 8, **caractérisé en ce que**
a) au niveau du corps de boîte de base (1), en vue de recevoir partiellement le joint intermédiaire (210), est prévue une rainure d'étanchéité (14), qui entoure radialement l'ouverture d'accès (12) dans la partie de bride (11), et
b) la rainure d'étanchéité (14) présente un flanc interne (16).

10. Dispositif selon la revendication 9, **caractérisé en ce que**
a) le joint intermédiaire (210) possède une lèvre d'étanchéité (207) avec un flanc d'étanchéité (206),
b) la lèvre d'étanchéité (207) s'appliquant avec une précontrainte contre le flanc interne (16) de la rainure d'étanchéité (14) dans le cas d'une embase de boîte (2) placée sur le corps de boîte de base (1), et
c) l'étanchéité étant de ce fait garantie, les imprécisions de mesure étant compensées et, en cas de dommage par augmentation de la pression, la lèvre d'étanchéité (207) étant pressée plus fortement contre le flanc interne (16).

11. Dispositif selon la revendication 10,
**caractérisé en ce que**
a) le joint intermédiaire (210) présente en dehors de la lèvre d'étanchéité (207) une surface d'application (208) extérieure, s'étendant radialement sur la circonférence, et une surface annulaire (209) et
b) la surface d'application (208) vient se placer entre la partie de bride (11) et la bride d'accouplement (110) dans le cas d'une embase de boîte (2) placée sur le corps de boîte de base (1) et
c) il existe une connexion par soudage thermoplastique ou collée plane entre la surface annulaire (209) et la bride d'accouplement (110).

12. Dispositif selon la revendication 10 ou 11,
**caractérisé en ce que**
a) le flanc d'étanchéité (206) prévu au niveau de la lèvre d'étanchéité (207) du joint intermédiaire annulaire (210) est conique et s'oriente vers l'axe longitudinal de l'embase de boîte (2) et
b) le flanc interne (16) prévu dans la rainure d'étanchéité conique (14) de la partie de bride (11) - par rapport au flanc d'étanchéité (206) du joint intermédiaire (210) - est de configuration plus raide, c'est-à-dire que le flanc interne (16) se rapproche de l'axe longitudinal théorique traversant l'embase de boîte (2) de façon plus raide que le flanc d'étanchéité (206).

13. Dispositif selon l'une quelconque des revendications 3 à 12, **caractérisé en ce que**
a) la branche du raccord (3) définie pour le raccordement au tuyau intérieur d'alimentation d'eau (51) sort du corps de boîte de base (1) et
b) la connexion filetée (4) entre le tuyau intérieur (51) et le raccord (3) est entourée par la pièce en entonnoir (130) ou par une partie s'élargissant de l'embase de boîte (2) et
c) l'embase de boîte (2) est formée d'une seule pièce ou de deux demi-coques pouvant être assemblées l'une à l'autre, qui sont connectées l'une à l'autre au niveau d'une ligne de séparation commune.

14. Dispositif selon l'une quelconque des revendications précédentes, **caractérisé en ce que** l'embase de boîte (2) est fabriquée par un procédé d'injection à deux composants.

15. Dispositif selon la revendication 14,
**caractérisé en ce que**
a) au cours de la première phase du procédé d'injection, la partie primaire (100) est injectée et
b) au cours de la deuxième phase du procédé d'injection, la partie secondaire (200) est injectée sur la partie primaire (100),
c) la partie secondaire (200) présentant au moins un segment annulaire (251) ou un joint intermédiaire (210) ou une combinaison des deux et ayant en outre un joint de fermeture (280).

16. Dispositif selon la revendication 15,
**caractérisé en ce que**
a) on utilise pour l'alimentation de la partie primaire (100) pendant la première phase du procédé d'injection, les canaux formés dans l'outil d'injection, lesquels correspondent aux nervures de connexion (152), qui s'étendent depuis la partie en entonnoir (130) jusqu'au premier segment de tuyau adjacent (151) ainsi qu'entre tous les segments de tuyau adjacents, et
b) on utilise, pour l'alimentation de la partie secondaire (200) pendant la deuxième phase du procédé d'injection, la rainure de débordement (113) formée dans la partie primaire (100) au cours de la première phase, laquelle correspond aux pattes de connexion (213), qui s'étendent depuis le joint intermédiaire (210) jusqu'au premier segment annulaire adjacent (251) ainsi qu'entre tous les segments annulaires adjacents (251) et - si on le souhaite - depuis le segment annulaire le plus externe (251) jusqu'au joint de fermeture (280).

17. Dispositif selon la revendication 16, **caractérisé en ce que,** pendant la deuxième phase du procédé d'injection, les contours d'engagement (153) prévus à l'extérieur sur les segments de tuyau (151) servent à la fixation des segments de tuyau (151), afin d'empêcher le déplacement des segments de tuyau (151) dans l'outil d'injection.

18. Dispositif selon l'une quelconque des revendications 15 à 17, **caractérisé en ce que** la partie primaire (100) est injectée à partir d'un thermoplastique - de préférence du polypropylène - et la partie secondaire (200) de préférence à partir d'un élastomère thermoplastique.
